# EUROPÄISCHE PATENTSCHRIFT

(11) **EP 0 923 177 B1**
(45) Veröffentlichungstag und Bekanntmachung des Hinweises auf die Patenterteilung: **08.01.2003**
(21) Anmeldenummer: 98123573.2
(22) Anmeldetag: 10.12.1998
(51) Int. Cl.: H02G 15/00, H01R 13/621, H02G 3/06

(54) **Kabeleinführung mit Überwurfmutter**
Cable entry with union nut
Entrée de cable avec écrou d'accouplement

(30) Priorität: 13.12.1997 DE 19755485
(43) Veröffentlichungstag der Anmeldung: 16.06.1999
(73) Patentinhaber: Phoenix Contact GmbH & Co. KG, 32825 Blomberg (DE)
(72) Erfinder: Lange, Ralf, 32805 Horn-Bad Meinberg (DE)
(74) Vertreter: Patentanwälte Dipl.-Ing. Bodo Thielking Dipl.-Ing. Otto Elbertzhagen

(56) Entgegenhaltungen:
- EP-A- 0 739 055
- US-A- 5 246 379
- US-A- 5 653 605

## Beschreibung

Die Erfindung bezieht sich auf eine Vorrichtung zum Einführen eines elektrisch oder optisch leitenden Kabels in ein entsprechendes Gerät, einen Verbinder oder dergl. der im Gattungsbegriff des Patentanspruchs 1 näher bezeichneten Art.

Es gibt eine Vielzahl von Geräten, Steckverbindern oder dergl., in die zu Zwecken der Energieanbindung oder Übertragung von Steuerungssignalen Kabel eingeführt werden müssen und an denen unsachgemäße Manipulationen nicht vorgenommen werden sollen, um Schäden oder Sicherheitsrisiken zu vermeiden. Die Kabeleinführung verlangt, daß das betreffenden Gerät oder das Verbindungselement bei der Montage des Kabels offen ist, um danach verschlossen zu werden. Sofern dafür Schrauben vorgesehen sind, kann man solche mit kodierten Köpfen verwenden, die nur mit Spezialwerkzeugen bedient werden können. Es gibt auch Schrauben mit Köpfen, die nur in einer Drehrichtung geschraubt werden können, um ein nachträgliches Öffnen des jeweiligen Gerätes ohne Zerstörung bestimmter Teile zu unterbinden. In den meisten Fällen ist den vorgesehenen Sicherheitsvorschriften jedoch Genüge getan, wenn zum Lösen der Verschlußeinrichtung ein Werkzeug verwendet werden muß, also ein Öffnen oder Lösen von Hand nicht möglich ist. Bei Kabeleinführungen der eingangs genannten Art kennt man hinsichtlich der schraubbaren Überwurfmutter derartige Sicherheitsvorkehrungen bislang nicht.

Aus dem Dokument US-A-5,653,605 ist eine am Ende eines rohrförmigen Hohlkörpers sitzende Überwurfmutter zur Sicherung von elektrischen Steckverbindern bekannt, die einen Innenkörper in Gestalt eines Innenringes und einen Außenkörper in Form eines Sicherungsringes aufweist. Der äußere Sicherungsring ist gegenüber dem Innenring sowohl verdrehbar als auch axial verschiebbar. Die axiale Verschiebung des mit äußeren Schlüsselflächen versehenen Sicherungsringes dient dazu, den Sicherungsring mit dem Innenring entweder drehfest zu verbinden oder die drehfeste Verbindung zu lösen. Befindet sich der Sicherungsring in derjenigen axialen Position, in der er in Drehrichtung lose gegenüber dem Innenring ist, kann er durch Verdrehen mit dem Hohlkörper drehfest gekuppelt bzw. davon wieder gelöst werden. Die drehfeste Verbindung des Sicherungsringes in einem Falle mit dem Innenring und im anderen Falle mit dem Hohlkörper ist in beiden Drehrichtungen wirksam.

Aus dem Dokument EP 0 739 055 A1 geht eine für Maschinen bestimmte elektrische Anschlußvorrichtung hervor, die eine auf einen Gewindeansatz aufschraubbare Mutter aufweist. Das Drehen der Mutter wird über einen Außenring bewirkt, der in Anzugsdrehrichtung in Eingriff mit der Mutter steht und entgegen der Anzugsdrehrichtung gegenüber der Mutter freilaufen kann. Dazu weisen der Mutterkörper und der Außenring entsprechend miteinander in Eingriff stehende Stirnverzahnungen auf, für deren Außereingriffbringen der Außenring in axialer Richtung auf dem Mutterkörper verschieblich ist. Um zum Lösen der Schraubverbindung den Außenring mit dem Mutterkörper drehfest zu verbinden, ist ein Bolzen vorgesehen, der in radial miteinander auszurichtende Bohrungen des Außenringes und des Mutterkörpers eingesetzt wird. Eine selbstätige Blockierung des Freilaufs ist hier nicht vorgesehen.

Der Erfindung liegt die Aufgabe zugrunde, eine gattungsbildende Vorrichtung zu schaffen, bei der ein Lösen der Überwurfmutter auch bei geringen Anzugsmomenten die Verwendung eines Werkzeugs erfordert, also ein Abschrauben der Überwurfmutter von Hand nicht möglich ist.

Diese Aufgabe wird nach der Erfindung bei einer gattungsgemäßen Vorrichtung durch die kennzeichnenden Merkmale des Patentanspruchs 1 gelöst.

Für die Erfindung ist wesentlich, daß die Freilaufkupplung der Überwurfmutter dann in Aktion tritt, wenn der Außenkörper von Hand oder mittels eines ungeeigneten, nicht ordnungsgemäß auf der Werkzeug-Anlagefläche aufsitzendem Werkzeug in Öffnungs- bzw. Lösedrehrichtung gedreht wird. Dann nämlich erfolgt eine Mitnahme des Innenkörpers der Überwurfmutter nicht, infolgedessen findet am Innengewinde des Innenkörpers der Überwurfmutter ein Schraubvorgang nicht statt. Andererseits ist mittels des geeigneten Werkzeugs, welches auf die Werkzeug-Anlagefläche des Außenkörpers unter Niederhalten des Kuppelgliedes paßt, ein Lösen der Überwurfmutter auch unter Überwindung eines in Schließdrehrichtung aufgebrachten Anzugdrehmomentes möglich. Hierdurch wird in der Öffnungsdrehrichtung der Überwurfmutter ein Ausweichen des Kuppelgliedes über die Werkzeug-Anlagefläche in radialer Richtung nach außen hinaus unterbunden und dadurch kommt das Kuppelglied in eine kraftschlüssige Verbindung mit dem Innenkörper, der sich daraufhin bei entsprechender Betätigung des Werkzeuges zusammen mit dem Außenkörper in Öffnungs- bzw. Lösedrehrichtung mitdreht.

Vorteilhafte Ausgestaltungsmerkmale der Erfindung ergeben sich aus den Merkmalen der Unteransprüche.

Die Erfindung wird nachfolgend anhand der Zeichnung an einem Ausführungsbeispel noch näher erläutert. Dabei zeigen:
- Fig. 1: eine perspektivische Darstellung einer Überwurfmutter für eine Kabeleinführung,
- Fig. 2: eine weitere perspektivische Darstellung der Überwurfmutter nach Figur 1, in der zur Sichtbarmachung der Freilaufkupplung das Oberteil des Außenkörpers weggebrochen ist,
- Fig. 3: eine Draufsicht auf die Überwurfmutter entsprechend der Darstellung.von Figur 2 in Mitnahmeposition der Freilaufkupplung in Schließdrehrichtung,
- Fig. 4: eine der Figur 3 entsprechende Darstellung in Mitnahmeposition der Freilaufkupplung in Öffnungsdrehrichtung und
- Fig. 5: eine den Figuren 3 und 4 entsprechende Darstellung in einer der Freilaufpositionen der Freilaufkupplung.

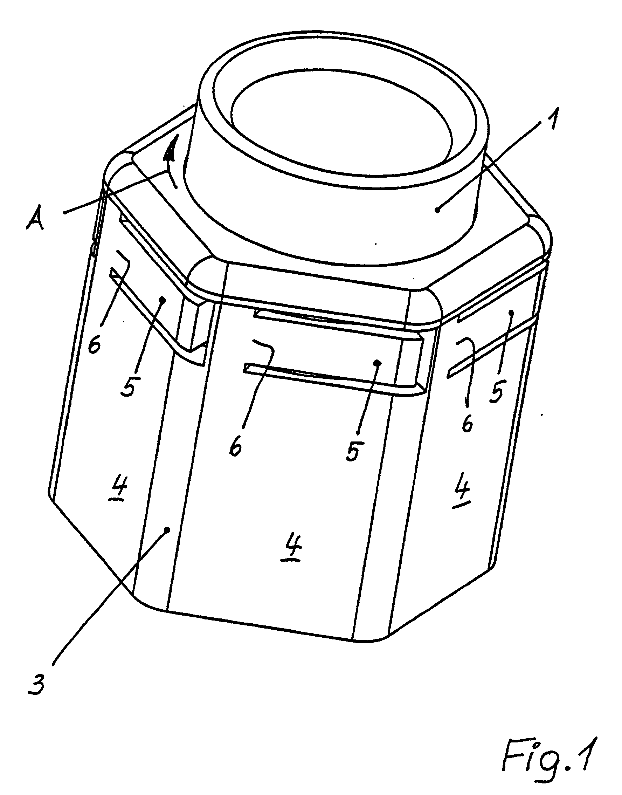

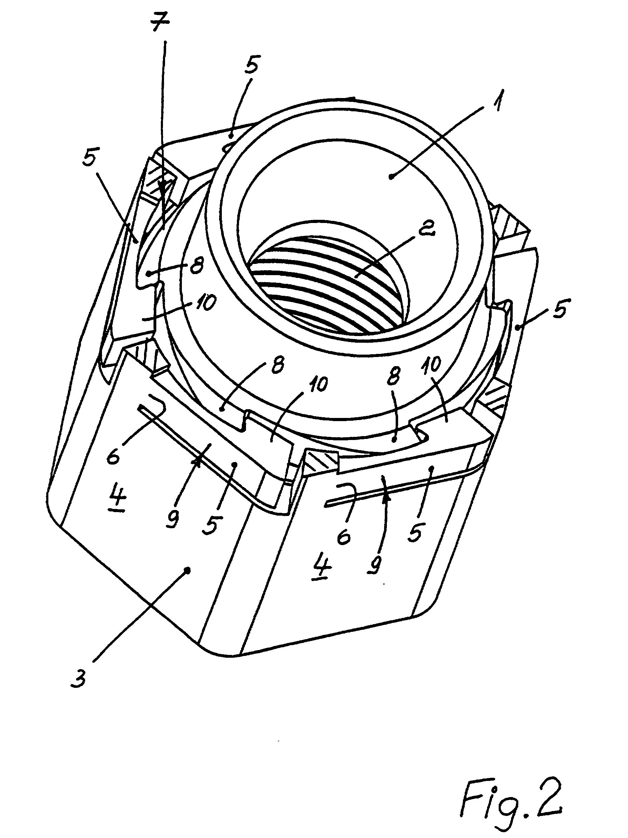

In der Ansicht der gesamten Überwurfmutter in Figur 1 erkennt man im einzelnen einen Innenkörper 1 und einen Außenkörper 3, wobei der Außenkörper 3 auf dem Innenkörper 1 drehbar gelagert ist. Der Innenkörper 1 hat das für eine Überwurfmutter übliche Innengewinde 2, was Figur 2 zu entnehmen ist. Zum Betätigen der Überwurfmutter finden sich an der Außenseite des Außenkörpers 3 Werkzeug-Anlageflächen 4, bei denen es sich um Schlüsselflächen zum Ansetzen eines Gabel- oder eines Ringschlüssels handelt. Als Sechskant-Überwurfmutter hat der Außenkörper 3 in Umfangsrichtung sechs solcher Werkzeug-Anlageflächen in regelmäßiger Anordnung, die je für sich eben sind.

Weiter zeigen die Figuren 1 und 2 Kuppelglieder 5, die als freigeschnittene oder -geformte Federzungen ausgebildet sind und entsprechend mittels eines Federgelenks 6 einstükkig mit dem Außenkörper 3 verbunden sind. Je Werkzeug-Anlagefläche 4 ist ein solches Kuppelglied 5 verhanden, das sich in Umfangsrichtung des Außenkörpers 3 erstreckt. Sämtliche Kuppelglieder 5 liegen in Richtung einer Umfangslinie des Außenkörpers 3 fluchtend hintereinander.

Die Kuppelglieder 5 sind Teile einer Freilaufkupplung 7, bei der es sich um eine Ratschenkupplung handelt, die zwischen dem Außenkörper 3 und dem Innenkörper 1 angeordnet ist. Dazu gehören weitere Ratschenglieder 8 in Gestalt von zahnförmigen Vorsprüngen, die als Zahnkranz entlang einer Umfangslinie an der Außenseite des Innenkörpers 1 angeordnet sind. Die Ratschenglieder 8 am Innenkörper 1 sind in gleicher Anzahl wie die Kuppelglieder 5 am Außenkörper 3 vorhanden.

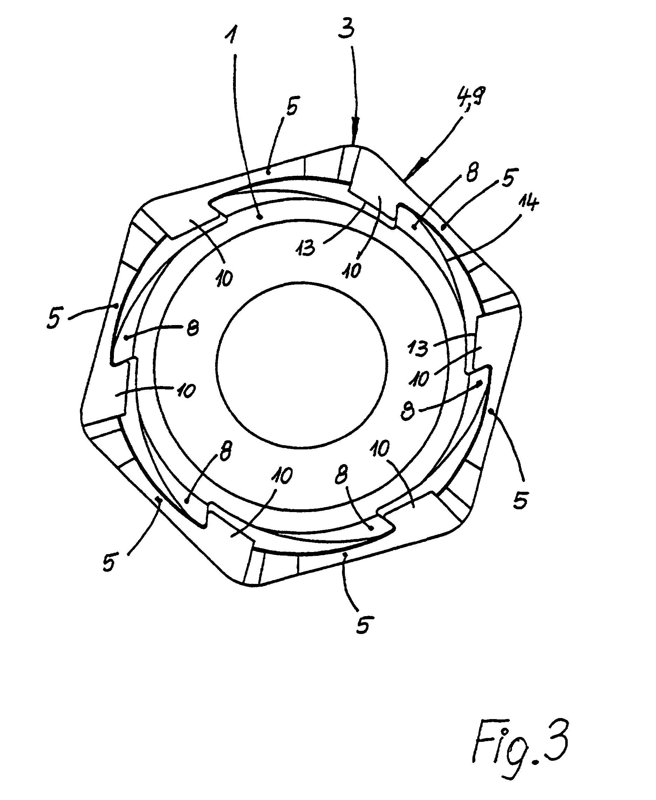

Wie man insbesondere den Figuren 3 bis 5 5 entnimmt, haben die Kuppelglieder 5, die in Achsrichtung der Überwurfmutter bezogen auf der Höhe der Ratschenglieder 8 am Innenkörper 1 liegen, an ihren Innenseiten vorstehende Hakenköpfe 10 mit einer zu ihrer Anlenkseite hin liegenden, hinterschnittenen Flanke 11. Entsprechend weisen die Ratschenglieder 8 am Innenring 1 eine in Radialrichtung gesehen hinterschnittene Vorderflanke 12 auf, an der der Hakenkopf 10 mit seiner Flanke 11 des jeweiligen Kuppelgliedes 5 dann zur Anlage kommt, wenn der Außenkörper 3 relativ zum Innenkörper 1 im Uhrzeigersinn gedreht wird. In diesem Fall besteht eine kraftschlüssige Verbindung zwischen dem Außenkörper 3 und dem Innenkörper 1 mittels Formschluß.

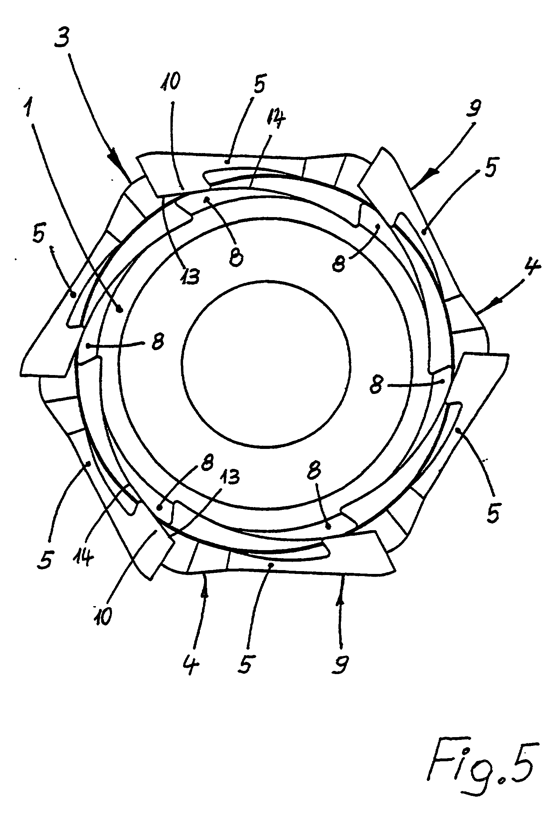

An ihrer radial nach innen hin liegenden Seite haben die Kuppelglieder 5 an ihren Hakenköpfen 10 eine Gleitfläche 13, die in ihrer Steigung in Umfangsrichtung gesehen an die Steigung einer rückwärtigen Flanke 14 an den Ratschengliedern 8 angeglichen ist. In der Ausgangslage tauchen die Hakenköpfe 10 der Kuppelglieder 5 in die Lücken zwischen den vorspringenden Ratschengliedern 8 am Innenkörper 1 ein. Wird der Außenkörper 3 relativ zum Innenkörper 1 entgegen dem Uhrzeigersinn gedreht, laufen die Hakenköpfe 10 an den Kuppelgliedern 5 mit ihren Gleitflächen 13 auf die rückwärtigen Flanken 14 der Ratschenglieder 8 auf. Die radial nach innen gerichtete Federkraft des Federgelenks 6 der Kuppelglieder 5 ist so ausgelegt, daß bei der üblichen Hemmung über das Innengewinde 2 in aufgeschraubter Lage der Überwurfmutter der Innenkörper 1 dem Außenkörper 3 in der Drehrichtung entgegen dem Uhrzeigersinn nicht nachfolgt, weswegen bis zum Erreichen des in radialer Richtung höchsten Punktes der rückwärtigen Flanken 14 der Ratschenglieder 8 die Kuppelglieder 5 radial nach außen hin ausweichen müssen, was in Figur 5 deutlich gemacht ist. Beim Weiterdrehen des Außenkörpers 3 relativ zum Innenkörper 1 entgegen dem Uhrzeigersinn federn die Kuppelglieder 5 radial nach innen hin zurück, wobei die Hakenköpfe 10 in die Lücken zwischen den Ratschengliedern 8 eintauchen, wonach dann beim Weiterdrehen des Außenkörpers 3 erneut die radiale Auslenkung der Kuppelglieder 5 erfolgt.

Wie aus den Figuren 2, 3 und 4 hervorgeht, haben die Kuppelglieder 5 am Außenkörper 3 außenliegende Rückenflächen 9, die mit den Werkzeug-Anlageflächen 4 in einer gemeinsamen Ebene liegen, solange eine Auslenkung der federnden Kuppelglieder 5 nach außen hin nicht erfolgt. Werden die Kuppelglieder infolge des Auflaufens ihrer Hakenköpfe 10 auf die Ratschenglieder 8 am Innenkörper 1 nach außen hin abgedrängt, wie es Figur 5 zeigt, stehen die dann leicht gewölbten Rückenflächen 9 der Kuppelglieder 5 in radialer Richtung deutlich über die ebenen Werkzeug-Anlageflächen 4 nach außen hin über.

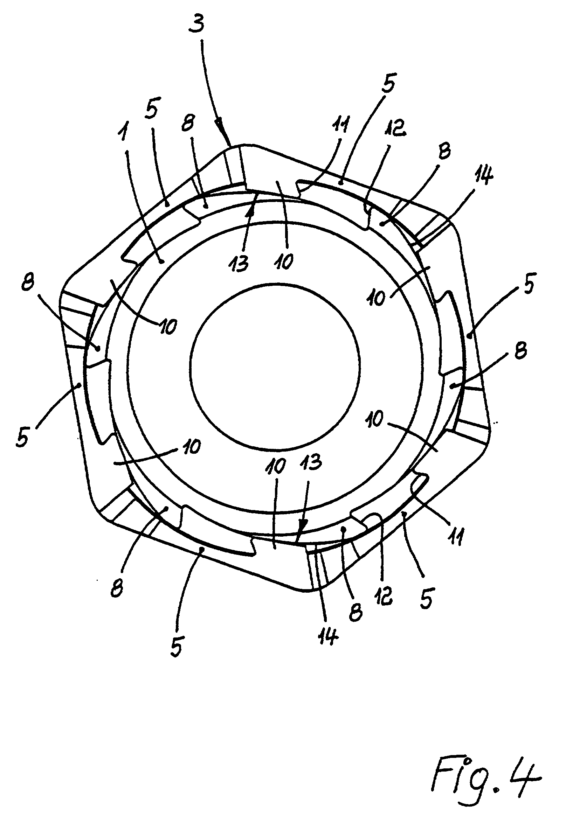

Setzt man in der Ausgangslage, in der die Rückenflächen 9 der Kuppelglieder 5 mit den Werkzeug-Anlageflächen 4 ebenengleich sind, an den Werkzeug-Anlageflächen 4 einen Gabel- oder einen Ringschlüssel an und dreht man dann von der Ausgangslage entgegen dem Uhrzeigersinn den Außenkörper 3 relativ zum Innenkörper 1, dann können die Kuppelglieder 5 nicht in der beschriebenen Weise nach außen hin ausweichen. Vielmehr bleiben die. Kuppelglieder 5 in derjenigen Position, die sich aus Figur 4 ergibt, was bedeutet, das in radialer Richtung gesehen die Kuppelglieder 5 von dem Werkzeug niedergehalten werden. Entsprechend sitzen die Kuppelglieder 5 mit den Gleitflächen 13 ihrer Hakenköpfe 10 auf den rückwärtigen Flanken 14 der Ratschenglieder 8 am Innenkörper 1 auf, denn ein weiterer Anstieg in Umfangsrichtung auf der rückwärtigen Flanke 14 der Ratschenglieder 8 ist nicht möglich. Dadurch wird beim Weiterdrehen des Außenkörpers 3 relativ zum Innenkörper 1 entgegen dem Uhrzeigersinn der Innenkörper 1 in dieser Drehrichtung mitgenommen. Die hierbei auftretenden Kräfte in radialer Richtung, die die Kuppelglieder 5 in radialer Richtung nach außen hin abzudrängen suchen, werden hierbei von den Gegenflächen des Werkzeugs aufgenommen, an denen sich die Kuppelglieder 5 mit ihren Rückenflächen 9 abstützen. Trotz der Keilwirkung, die zwischen den in Umfangsrichtung relativ gering ansteigenden rückwärtigen Flanken 14 der Ratschenglieder 8 am Innenkörper 1 und den Gleitflächen 13 an den Hakenköpfen 10 der Kuppelglieder 5 besteht, können infolge der sicheren Anlage der Kuppelglieder 5 an dem betreffenden Werkzeug erhebliche Kräfte in Umfangsrichtung von dem Außenkörper 3 auf den Innenkörper 1 übertragen werden.

In den zeichnerischen Darstellungen ist die Drehrichtung des Außenkörpers 3 relativ zum Innenkörper 1 im Uhrzeigersinn der Schließ- oder Anzugsdrehrichtung der Überwurfmutter zugeordnet. In dieser Drehrichtung erfolgt also stets eine Mitnahme des Innenkörpers 1 durch den Außenkörper 3. In der entgegengesetzten Öffnungs- oder Lösedrehrichtung hat der Außenkörper 3 relativ zum Innenkörper 1 einen Freilauf, solange das beschriebene Niederhalten der Kuppelglieder 5 nicht erfolgt. Entsprechend besteht in dieser Drehrichtung eine Drehmitnahme des Innenkörpers 1 über den Außenkörper 3 nur dann, wenn ein ordnungsgemäß am Außenkörper 3 an den Werkzeug-Anlageflächen 4 angesetztes Werkzeug mit seinen Gegenflächen auch auf den Rückenflächen 9 der Kuppelglieder 5 aufsitzt und deren radiales Ausweichen nach außen hin verhindert.

## Patentansprüche

1. Vorrichtung zum Einführen eines Kabels mit zumindest einem elektrischen oder optischen Leiter in ein entsprechendes Gerät, einen Steckverbinder oder dergl. mit einer auf einen Gewindeansatz aufschraubbaren Überwurfmutter, die aus einem Innenkörper (1) mit einem auf den Gewindeansatz passenden Innengewinde (2) sowie aus einem auf dem Innenkörper (1) drehbar gelagerten Außenkörper (3) mit wenigstens einer daran außenseitig angeordneten Werkzeug-Anlagefläche (4) besteht und durch die das Kabel hindurchführbar ist,
**dadurch gekennzeichnet,**
**daß** zwischen dem Innenkörper (1) und dem Außenkörper (3) eine diese beiden Körper (1, 3) in Schließdrehrichtung stets kuppelnde Freilaufkupplung (7) mit wenigstens einem beweglichen Kuppelglied (5) angeordnet ist, das bei Freilauf in Öffnungsdrehrichtung radial nach außen bis über die Werkzeug-Anlagefläche (4) des Außenkörpers (3) hinaus ausweicht, wobei nur beim Niederhalten des Kuppelgliedes (5) durch ein auf der betreffenden Werkzeug-Anlagefläche (4) des Außenkörpers (3) aufsitzendes Werkzeug die Drehmitnahme auch in Öffnungsdrehrichtung erfolgt.

2. Vorrichtung nach Anspruch 1,
**dadurch gekennzeichnet,**
**daß** die Freilaufkupplung (7) eine Ratschenkupplung ist, die feste Ratschenglieder (8) am Innenkörper (1) sowie am Außenkörper (3) wenigstens ein radial beweglich angeordnetes, mit den Ratschengliedern (8) am Innenkörper (1) in Eingriff bringbares Ratschenglied als Kuppelglied (5) hat.

3. Vorrichtung nach Anspruch 2,
**dadurch gekennzeichnet,**
**daß** die Ratschenglieder (8) am Innenkörper (1) und eine entsprechende Anzahl der Kuppelglieder (5) am Außenkörper (3) jeweils entlang einer Umfangslinie hintereinander angeordnet sind.

4. Vorrichtung nach Anspruch 2 oder 3,
**dadurch gekennzeichnet,**
**daß** die Kuppelglieder (5) am Außenkörper (3) in dessen Umfangsrichtung liegende, daran nach Art von Federzungen mittels eines Federgelenks (6) einstückig angeformte Klinken sind, die in nicht ausgelenkter Position mit der Werkzeug-Anlagefläche (4) bündig liegende Rückenflächen (9) haben.

5. Vorrichtung nach Anspruch 4,
**dadurch gekennzeichnet,**
**daß** der Außenkörper (3) außenseitig zwei oder mehrere Werkzeug-Anlageflächen (4) in Form von ebenen Schlüsselflächen hat und je Anlagefläche (4) ein Kuppelglied (5) vorhanden ist, das mit seiner Rückenfläche (9) in nicht ausgelenkter Lage mit der zugehörigen Anlagefläche (4) ebenengleich ist.

6. Vorrichtung nach einem der Ansprüche 2 bis 5,
**dadurch gekennzeichnet,**
**daß** die Ratschenglieder (8) am Innenkörper (1) zahnförmige Vorsprünge sind, die in Umfangsrichtung am Innenkörper (1) angeordnet sind und die eine in Schiießdrehrichtung rückwärtige Flanke (14) mit einer in Öffnungsdrehrichtung solchen Steigung haben, daß zum einen über das sich darauf abstützende, niedergehaltene Kuppelglied (5) das in Schließdrehrichtung aufgebrachte Anzugsdrehmoment überwunden und zum anderen das federbelastete Kuppelglied (5) im Freilauffall ohne Mitnahme des Innenkörpers (1) mit entsprechender Kraft radial nach außen gedrängt wird.

## Claims

1. Device for introducing a cable with at least one electrical or optical conductor into a corresponding device, a plug or similar with a sleeve nut which can be screwed onto a threaded neck and consists of an inner body (1) with an inner thread (2) which corresponds to the threaded neck and an outer body (3) arranged in a rotating way on the inner body (1) with at least one tool contact surface (4) arranged on it on the outside and through which the cable can be guided,
**characterised in that**
between the inner body (1) and the outer body (3) a freewheel clutch (7) coupling these two bodies (1, 3) constantly in the closure rotation direction is arranged with at least one movable coupling member (5) which upon freewheeling in the opening direction deviates radially outwards beyond the tool contact surface (4) of the outer body (3) wherein only when the coupling member (5) is held down by a tool arranged on the relative tool contact surface (4) of the outer body (3) the carrying along in rotation also takes place in the opening rotation direction.

2. Device according to claim 1,
**characterised in that**
the freewheel clutch (7) is a ratchet clutch which has fixed ratchet members (8) on the inner body (1) as well as on the outer body (3) at least one ratchet member arranged in a radially movable way which can be brought into engagement with the ratchet members (8) on the inner body (1) as a coupling member.

3. Device according to claim 2,
**characterised in that** the ratchet members (8) on the inner body (1) and a corresponding number of the coupling members (5) on the outer body (3) are respectively arranged along a peripheral line behind each other.

4. Device according to claim 2 or 3,
**characterised in that**
the coupling members (5) are catches lying on the outer body (3) in its peripheral direction formed on it in a one-component way as spring tongues by means of a spring joint (6), wherein these catches in a non-deflected position with the tool contact surface (4) have flush lying rear surfaces (9).

5. Device according to claim 4,
**characterised in that**
the outer body (3) has on the outer side two or more tool contact surfaces (4) in form of level key surfaces and for each contact surface (4) a coupling member (5) is present which with its rear surface in non-deflected position is at the same level as the associated contact surface (4).

6. Device according to one of the claims 2 to 5,
**characterised in that**
the ratchet members (8) on the inner body (1) are teeth-like shoulders which are arranged in the peripheral direction on the inner body (1) and which have a rear flank (14) in the closure direction with such an incline in opening rotation direction that on the one hand by means of the held back coupling member (5) supported thereupon the tightening torque applied in the closure rotation direction is overcome and on the other hand the spring-loaded coupling member (5) in the case of free running is pushed without taking along the inner body (1) with corresponding force radially outwards.

## Revendications

1. Dispositif pour insérer un câble, comprenant au moins un conducteur électrique ou optique, dans un appareil adéquat, un connecteur à fiches ou autre pièce analogue, avec un écrou d'accouplement qui, pouvant être vissé sur un appendice fileté, est composé d'un corps intérieur (1) avec filetage intérieur (2), adapté à l'appendice fileté, ainsi que d'un corps extérieur (3) avec au moins une surface de contact pour un outil (4) disposée sur le côté externe, le câble pouvant être passé à travers ledit écrou d'accouplement,
**caractérisé en ce**
**qu'**un accouplement libre (7), qui accouple constamment ces deux corps (1, 3) dans le sens de rotation de fermeture, est disposé entre le corps intérieur (1) et le corps extérieur (3) et comprend, au moins, un élément d'accouplement mobile (5) qui, en course libre, dans le sens de rotation d'ouverture, dévie vers l'extérieur, dans le sens radial, au delà de la surface de contact pour un outil (4) du corps extérieur (3), l'entraînement en rotation ne s'effectuant également dans le sens de rotation d'ouverture que lorsque l'élément d'accouplement (5) est maintenu abaissé par un outil qui porte contre la surface de contact pour un outil correspondante (4) du corps extérieur.

2. Dispositif selon la revendication 1,
**caractérisé en ce**
**que** l'accouplement libre (7) est un accouplement à cliquet qui présente, sur le corps intérieur (1), des éléments d'encliquetage fixes (8) et, sur le corps extérieur (3), au moins un élément d'encliquetage, mobile dans le sens radial, en tant qu'élément d'accouplement (5) qui peut être mis en prise avec les éléments d'encliquetage (8), qui équipent le corps intérieur (1).

3. Dispositif selon la revendication 2,
**caractérisé en ce**
**que** les éléments d'encliquetage (8), qui équipent le corps intérieur (1), et un nombre correspondant d'éléments d'accouplement (5), prévus sur le corps extérieur (3), sont respectivement disposés les uns derrière les autres, sur le pourtour de celui-ci.

4. Dispositif selon la revendication 12 ou 3,
**caractérisé en ce**
**que** les éléments d'encliquetage (5), qui équipent le corps extérieur (3), sont des cliquets disposés sur le pourtour dudit corps extérieur (3), à partir duquel ils sont formés d'une seule pièce, à la manière de languettes élastiques à l'aide d'une articulation à ressort (6), lesquels cliquets présentent, en position non repoussée vers l'extérieure, des surfaces arrière (9) qui sont à surface plane avec la surface de contact pour un outil (4).

5. Dispositif selon la revendication 4,
**caractérisé en ce**
**que** le corps extérieur (3) possède, sur le côté extérieur, deux ou plusieurs surfaces de contact pour un outil (4) en forme de surfaces d'actionnement planes et que, pour chaque surface d'appui (4), un élément d'accouplement (5) est prévu, dont la surface arrière (9), en position non repoussée vers l'extérieur, est au même niveau que la surface de contact (4) correspondante.

6. Dispositif selon l'une des revendications 2 à 5,
**caractérisé en ce**
**que** les éléments d'encliquetage (8), qui sont prévus sur le corps intérieur (1), sont des saillies en forme de dents qui sont disposées sur le corps intérieur (1), sur le pourtour de celui-ci, et qui présentent un flanc (14), à l'arrière dans le sens de rotation de fermeture, dont le pente ascendante, dans le sens de rotation d'ouverture, est telle que, d'une part, le couple initial de démarrage appliqué dans le sens de rotation de fermeture est surmonté au-delà de l'élément d'accouplement (5), maintenu abaissé, y prenant appui, et que, d'autre part, l'élément d'accouplement (5) commandé par ressort est chassé vers l'extérieur, dans le sens radial, en cas de course libre sans entraînement du corps intérieur (1), par force adéquate.
